Europäisches Patentamt

European Patent Office

Office européen des brevets

(19)

(11) **EP 1 726 603 A1**

(12) **EUROPEAN PATENT APPLICATION**

(43) Date of publication:
29.11.2006 Bulletin 2006/48

(51) Int Cl.:
*C08F 110/06* (2006.01)   *C08F 2/00* (2006.01)

(21) Application number: 05011524.5

(22) Date of filing: 27.05.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Borealis Technology Oy**
**06101 Porvoo (FI)**

(72) Inventors:
• **Jääskeläinen, Pirjo**
**06150 Porvoo (FI)**

• **Tuominen, Olli**
**00930 Helsinki (FI)**
• **Ommundsen, Espen**
**3970 Langesung (NO)**
• **Ackermanns, Nina**
**Tessenderlo, 3980 (BE)**

(74) Representative: **Kador & Partner**
**Corneliusstrasse 15**
**80469 München (DE)**

(54) **Propylene polymer with high crystallinity**

(57)    A composition suitable for the manufacture of films having a very advantageous stiffness-processability-balance comprising a high crystalline propylene polymer having
a) $T_P$ of at least 122.5 °C and
b) $T_w$ of at least 118 °C, whereby

the $T_P$ and the $T_w$ are calculated from the temperature rising elution fractionation (TREF)-function of the propylene polymer in the range of 80 to 140 °C, wherein
$T_P$ is the maximum temperature of the TREF-function;

$T_w$ the weight average temperature of the TREF-function defined by

$$T_w = \frac{\sum c_i \cdot T_i}{\sum c_i}$$

$T_i$ the temperature at which the concentration $c_i$ of an elute is determined; and
$c_i$ the concentration of the elute at the temperature $T_i$.

Fig. 1

EP 1 726 603 A1

**Description**

The present invention is related to a high crystalline propylene polymer suitable for films, as well as to the process of the same and its use.

The stiffness-processability-balance of propylene polymers depends on the end-use application for which they are employed. In applications wherein good stretchability is needed, such as in biaxially oriented film applications, a propylene polymer with a combination of a high stiffness and good processability is difficult to achieve. A high crystalline propylene polymer produced using modern high-yield 4th and 5th generation of Ziegler-Natta catalysts offers the high stiffness, but its processability is normally problematic: Such high crystalline propylene has e.g. poorer stretchability compared to similar polymer produced using so called second generation of Ziegler-Natta catalysts with a low catalytic activity. For improving the processability of the high crystalline propylene polymer produced with the high-yield Ziegler-Natta catalysts, e.g. small amounts of a comonomer has been introduced into the polymer (see e.g. EP0339804 of Exxon). The addition of comonomer results in a lower isotacticity of such polypropylene and thus in a lower melting temperature which improves the processability for biaxially oriented polypropylene film applications. However, this improved processability property is paid with a reduced stiffness of a film.

It is also known, that i.a. a low melt flow rate (MFR) and a broad molecular weight distribution (MWD) contribute to a good processability. However, said stiffness-processability balance has remained a challenge. This can be seen from the fact that said second generation catalysts have still been conventionally used for preparing polymers that are feasible for the above film applications, although they are less favorable due to i.a. their low activity and a typical need of a further process step, i.e. washing of the polymerized polymer product. Accordingly, the product window for propylene polymers with the above stiffness-processability-balance has been limited.

WO2004/013193 discloses a polypropylene having a content of isotactic pentads (mmmm) higher than 97%, a $M_w/M_n$ ratio equal to or higher than 6 and a $M_z/M_w$ ratio equal to or lower than 5.5. However, the stiffness-processability-balance of propylene polymers has not been mentioned. Furthermore, no discussion of the isotacticity distribution and the isotactic sequence length for the polymers can be found.

Accordingly, there is a continuous need to further develop new propylene polymers, which are characterized by an excellent stiffness-processability-balance, making them suitable for certain end applications such as films, especially bioriented films, used in packaging articles or in articles for electrical applications, such as in capacitor films.

The object of the present invention is therefore to broaden the product window of polypropylene materials in demanding end-use applications. More particularly the object of the present invention is to provide a propylene polymer having a very advantageous stiffness-processability-balance, in particular for film applications including biaxially oriented polypropylene film applications.

Surprisingly, it has been found that the above-stated object can be achieved with a high crystalline propylene polymer which has a combination of long isotactic sequences and an even distribution of said isotactic sequences within the polymer chain. Optionally, the crystalline propylene polymer of the invention has said combination together with a broad molecular weight distribution (MWD).

The measurement of isotactic sequence length distribution has been performed by using the temperature raising elution fraction (TREF) technique (exact description below in the experimental part), which fractionates propylene polymers according to the solubility differences. It has been clearly demonstrated for propylene polymers that TREF technique fractionates the propylene polymer according to the longest crystallisable sequences in the chain, which increases almost linearly with the elution temperature. Hence the higher the maximum temperature ($T_P$) and the higher the weight average temperature ($T_w$) of the TREF curve, the longer are the isotactic sequences.

Accordingly, the present invention is related to a high crystalline propylene polymer having

a) $T_P$ of at least 122.5°C, more preferably of at least 123 °C; and
b) $T_w$ of at least 118°C, more preferably of at least 119 °C, whereby the $T_P$ and the $T_W$ are calculated from the temperature raising elution fraction (TREF) function of the propylene polymer in the range of 80 to 140°C, wherein $T_P$ is the maximum temperature of the TREF function;
$T_w$ the weight average temperature of the TREF function defined by

$$T_w = \frac{\sum c_i \cdot T_i}{\sum c_i}$$

$T_i$ the temperature at which the concentration $c_i$ of an elute is determined; and
$c_i$ the concentration of the elute at the temperature $T_i$.

The TREF determination may typically be effected as described below under "definitions and determination methods" using the TREF instrument, including the software thereof for the above and below calculations.

It is in particular preferred that the propylene polymer according to this invention has a value σ of no more than 10 °C, whereby σ is defined as follows:

$$\sigma = \sqrt{\frac{\sum c_i (T_i - T_w)^2}{\sum c_i}}$$

whereby each variable of this equation is obtained from the TREF-function as defined above. Said σ value indicates the beneficial isotactic sequence distribution of the present invention.

Furthermore, it is preferred that the propylene polymer has a $T_P/R$ ratio of at least 75°C, suitably of at least 80°C, preferably of at least 85 °C. In some embodiments of the present propylene polymer $T_P/R$ ratio can be even of at least 90 °C depending on the end-use application. $T_P/R$ is obtained from the TREF-function as defined above, wherein R is defined as follows:

$$R = \left( \frac{T_w}{T_n} - 1 \right) \cdot 100$$

wherein $T_n$ is the number average temperature of the TREF function defined by

$$T_n = \frac{\sum c_i}{\sum c_i / T_i}$$

The $T_P/R$ ratio is not only an indicator for the long isotactic sequence length but also for an even isotactic sequence distribution. $T_P/R$ increases with increasing of the isotactic sequence length and with decreasing of the isotactic sequence length distribution. Therefore, the $T_P/R$ ratio is a further indicator for the balanced stiffness-processability as a long isotactic sequence length contributes to the crystallinity of the propylene polymer and the even sequence distribution improves the processability.

A further indicator of a long isotactic sequence length and an even sequence distribution is the SDBI value defined by solubility distribution index

$$SDBI = \sqrt[4]{\frac{\sum \left| (T_i - T_w)^4 c_i \right|}{\sum c_i}}$$

A low value of SDBI indicates a narrow TREF curve peak and thus an even isotactic sequence length distribution. Therefore, it is preferred that the SDBI is lower than 24 °C.

It is important for the present invention that the propylene polymer has a high crystallinity. To achieve a high crystallinity, the propylene polymer must have a high isotacticity. Therefore, it is preferred that the propylene polymer has an isotacticity expressed in mmmm pentads of at least 97 %, more preferred of at least 97.5 %, measured by means of $^{13}$C-NNR.

Furthermore, the propylene polymer has typically an isotactic sequence length of at least 150, preferably 200, more preferably of at least of 300, measured as meso run length values by means of $^{13}$C-NMR as defined below under "Definitions and Determination methods". Depending on the end-use application, in some embodiments of the invention, even a sequence length of at least 400 can also be beneficial and thus covered by the invention. The longer the meso run, the higher the crystallinity of the material.

Generally the higher the isotacticity the narrower the process window and a higher stretching force is needed.

The fact that the propylene polymer of the present invention has additionally an even isotactic sequence length distribution benefits in improved processability and stretchability of the propylene polymer.

Preferably, the propylene polymer of the invention has further a broad MWD which contributes very desirably to the processability and provides feasible means for further tailoring the mechanical and/or processing properties of the polymer depending on the needs desired for the end-use application. MWD can be measured by SEC (also known as GPC), whereby it is expressed as $M_w/M_n$, or by a rheological measurement, like Polydispersity Index (PI) -measurement or Shear Thinning Index (SHI) - measurement. All these measurements are known and further defined below under "Definitions and Determination Methods".

Accordingly, in one preferred embodiment, the molecular weight distribution (MWD) expressed by $M_w/M_n$ is of at least 5, preferably of at least 5.5, and more preferably of at least 6. In turn, the upper limit of the molecular weight distribution (MWD) is preferably no more than 20, preferably no more than 10 and more preferably no more than 9 and yet more preferably no more than 8.5.

As already mentioned above the polydispersity index (PI) is a further indicator for the molecular weight distribution (MWD) of the propylene polymer. It is preferable that the propylene polymer has a PI of at least 5.0, preferably of at least 5.5 and more preferably of at least 6.

Furthermore, as stated above, the shear thinning index (SHI) is a very sensitive indicator of MWD. The higher the SHI value the broader the MWD. Therefore, the propylene polymer of the invention has preferably SHI(0/50) of at least 12, preferably of at least 14, more preferably of at least 16. Typically SHI(0/50) may vary between the range of 15 to 22, preferably of 16 to 20. In another embodiment SHI(0/50) of 16 to 18 is feasible.

Moreover, the molecular weight of a polymer can be further expressed by way of its melt flow rate (MFR). An increase in molecular weight means a decrease in the MFR-value. The melt flow rate ($MFR_2$) is preferably measured as described below under "Definitions and Determination methods".

It is preferred that the $MFR_2$ is of 2 to 6 g/10 min, preferably 2 to 5 g/10 min.

The xylene solubles fraction contains polymer chains with a low molecular weight and a low stereo-regularity. Hence, as the propylene polymer of the invention has a high crystallinity, i.e. has a long isotactic sequence length and an even isotactic sequence distribution, the propylene polymer preferably has xylene solubles (XS) below 3 wt%, preferably below 2 wt%, more preferably below 1.5 wt%, yet more preferably 1.4 wt%. For other embodiments, the XS of the present propylene polymer may be even as low as 1.3 wt% or lower, or even as low as 1 wt% or lower may be preferred, again depending on the needs of the end-use application.

Similarly, the propylene polymer has decaline solubles preferably below 2.5 wt%, more preferably below 1.6 wt%, still more preferably below yet more preferably equal or below 1.3 wt%. For another embodiment, the decaline solubles 1.0 wt% or lower, or even as low as 0.8 wt% or lower are desirable. Such embodiment is also covered by the invention.

Advantageously, the propylene polymer has typically a rather high melting temperature. Accordingly, it is preferable that the melting temperature is of at least 162°C, more preferably of at least 163°C.

In addition, it is preferred that the propylene polymer has a crystallinity of at least 50% measured by DSC. Moreover, the crystallization temperature ($T_{cr}$) shall be preferably of at least 110°C, more preferably of at least 113°C, e.g. between 110°C and 122°C, such as 115°C and 120°C without any added nucleating agent. The crystallinity and thus the crystallization temperature ($T_{cr}$) of the propylene polymer can be further increased in a manner known in the field, e.g. by adding nucleation agents during or after polymerization of the polymer. In one embodiment, the propylene polymer is produced in the presence of a nucleating agent, whereby the composition has a crystallization temperature ($T_{cr}$) of 118°C or more.

Furthermore, it is advantageous that the amount of catalyst residues in the polymer are low. Accordingly, the propylene polymer has preferably an Al-content of less than 50 ppm, more preferably of less than 48 ppm. Preferably, the low Al-content is in the propylene polymer obtained directly after the polymerization step, i.e. the Al-content of the reactor powder, without any post-reactor treatments such as washing steps to remove or decrease the aluminium in the propylene polymer. The reactor powder is also called as reactor-made propylene polymer. Depending on the end-use, it is of course possible to further wash the reactor-made product to reduce further any undesired residues contained therein, if needed.

The invention covers both homopolymers of propylene and copolymers, preferably random copolymers, of propylene with one or more alpha-olefins including ethylene, however, a homopolymer is preferred. In case of random copolymers it is preferred that only small amounts of comonomer is incorporated to the propylene chains, preferably less than 0.2 wt%, more preferably less than 0.1 wt%, still more preferably less than 0.05 wt%, yet more preferably less than 0.005 wt%, other alpha-olefins than propylene in the polymer. The comonomer is preferably at least ethylene.

According to a preferred embodiment the propylene polymer has a broad MWD and comprises at least two propylene polymer components with different weight average molecular weights ($M_w$) and thus with different melt flow ratios (MFR). The lower molecular weight (LMW) component has a higher MFR than the higher molecular weight (HMW) component. The ratio between the $MFR_2$ of LMW component and $MFR_2$ of HMW component is typically at least 30, preferably at least 40, more preferably at least 50. The upper limit of said ratio of ($MFR_2$ of LMW):($MFR_2$ of HMW) may be up to 400, preferably up to 200.

Preferably, the propylene polymer is bimodal comprising a LMW-component and a HMW-component. The amount of the LMW-component is typically between 30 to 70 wt% preferably 40 to 60 wt % of the total amount of propylene polymer. In turn, the amount of the HMW-component is typically between 30 to 70 wt%, preferably 40 to 60 wt%, of the total amount of propylene polymer. Preferably, both components are homopolymers as defined above. The multimodality, preferably bimodalty, with respect to the molecular weight distribution provides very advantageous MWD for the final propylene polymer.

According to a preferable embodiment, the propylene polymer of the invention is a reactor-made propylene polymer and has at least the $T_p$ and $T_w$ values as defined below in claims. More preferably, one or more of the following properties of the reactor-made propylene polymer is/are as given above or in claims: $T_p$/R, σ, SDBI, MWD, XS, PI, decaline solubles, isotacticity index, isotactic sequence length and MWD, preferably at least one of XS, PI or decaline solubles.

The reactor-made propylene polymer means herein the reaction product as obtained from the polymerization process, i.e. the reactor-made propylene polymer has not been subjected to any washing or treatment step for decreasing or removing 1) the Al or other residues originating from the catalyst or 2) the fraction of soluble polymers determined as XS or decaline solubles (e.g. in order to increase the degree of isotacticity), or both 1) and 2). Naturally, if desired, the reactor-made propylene polymer of this embodiment may then be treated in a subsequent treatment step, e.g. washing step, in a known manner for further tailoring, e.g. for further reducing the Al residues and/or soluble polymer fraction, of the product.

Further preferably, the propylene polymer of the invention is obtainable by a Ziegler Natta catalyst, more preferably by a high yield 4th or 5th generation Ziegler Natta catalyst.

The present invention provides also a process for preparing the propylene polymer, wherein the propylene monomers, optionally together with one or more comonomers, are polymerized in the presence of a polymerization catalyst. In case the propylene polymer consists of one component only, the process is a single-stage process.

In principle, any polymerization method including solution, slurry and bulk polymerization or gas phase polymerization can be used for producing the propylene polymer. Bulk means in the present application a polymerization in reaction medium comprising at least 60 wt% monomer.

The invention further provides a process for producing a propylene polymer comprising at least two different propylene polymer components with different molecular weights as defined above, wherein each polymer component is produced by polymerizing propylene monomers, optionally together with one or more comonomers, in the presence of a polymerization catalyst in a multi-stage polymerization process using one or more polymerization reactors. Each stage may be effected in parallel or sequentially using the same or different polymerization method. In case of a sequential stage the polymer components may be produced in any order operating each step, except the first step, in the presence of the polymer component formed and preferably the catalyst used in the preceding step.

Although the preferable method for producing a multimodal polypropylene is the multi-stage process, wherein each or part of the components are blended in situ during the polymerization process thereof, the invention covers also mechanical blends, wherein two or more separately produced propylene polymer components are blended mechanically in a manner known in the art.

Preferably, the propylene polymer is at least bimodal with respect to the MWD and comprises preferably a LMW-component and a HMW-component as defined above, whereby one of the propylene polymer components is produced in a slurry process and the other polymer component is preferably produced by gas phase polymerization in a gas phase reactor.

A preferred embodiment of the process of the invention is also provided for producing the above propylene polymer of the invention which comprises at least one propylene homo or copolymer component and optionally a further propylene homo or copolymer component, wherein the process includes the steps:

a) polymerizing in a slurry reactor, e.g. a loop reactor, propylene monomers, optionally together with one of more copolymers, in the presence of a polymerization catalyst to produce a first propylene polymer and, optionally, transferring the reaction product of step a) to a subsequent gas phase reactor,
b) polymerizing in a gas phase reactor propylene monomers, optionally together with one or more comonomers, in the presence of the reaction product of step a) to produce a second propylene polymer for obtaining the final propylene polymer.

The propylene polymer obtained from the above embodiment is one preferable example of the reactor-made propylene polymer.

In case of at least a bimodal propylene polymer as defined above, the HMW-component is preferably produced in step (a) and the LMW-component is produced in a subsequent step (b) in the presence of the reaction product of step (a) obtained from the first reactor.

The above process comprising at least steps (a) and (b) is very advantageous, since it provides very feasible means for producing the highly crystalline propylene polymer, preferably a reactor-made propylene polymer, which has the surprising stereochemistry of the invention and a multimodality, preferably bimodality, for achieving the optional broad MWD. Furthermore, said process enables the use of modern, 4th or 5th generation Ziegler-Natta catalysts for producing the propylene polymer of the invention in markedly high yields. Accordingly the invention further provides a propylene polymer obtainable by any of the above described process, preferably by the above process comprising at least the steps (a) and (b).

Such a preferred multi-stage process is a loop-gas phase process (such as developed by Borealis A/S, Denmark, known as Borstar® technology) as described inter alia in EP 0 887 379 and WO92/12182, respectively. These documents are included herein by reference.

In a preferred embodiment the propylene polymer is a homopolymer polymer, preferably at least the bimodal propylene homopolymer, and is obtainable by any of the processes as described above or in claims.

In case of random copolymer, the comonomer can be introduced in any of the step (a) and/or (b) in the above preferred multi-stage process.

The properties of the polymer composition can be adjusted or controlled with the process conditions in a known manner, e.g. with one or more of the following process parameters: temperature, hydrogen feed, comonomer feed, propylene feed, catalyst, the type and amount of an external donor (if used), split between two or more components of a multimodal polymer, e.g. between components obtainable from step (a) and (b).

Preferably, the above embodiment comprises the process steps (a) and (b),
whereby the polymerization conditions for the slurry reactor of the first stage may be as follows:

the temperature is within the range of at least 80°C, preferably at least 85°C;
the pressure is within the range of 20 to 80 bar, preferably 30 to 60 bar; and
hydrogen can be added for controlling the molar mass in a manner known in the art, and
the reaction mixture from the slurry (bulk) reactor is then transferred to the gas phase reactor, i.e. to step b), wherein the polymerization conditions are preferably as follows:
The temperature is within the range of at least 85°C, preferably of at least 90°C;
the pressure is within the range of 5 to 50 bar, preferably 15 to 20 bar, most preferably between 50 to 35 bar; and
hydrogen can be added for controlling the molar mass known in the art.

It is in particular preferred, that the temperature in the polymerization (a) and (b) is more than 80 °C and the temperatures in each step can be the same or alternatively the temperature in the gas phase step (b) is higher than in the slurry reactor step (a).

The obtained propylene polymer can be further worked up, e.g. the propylene polymer is pelletized by using an extruder as known in the art. Moreover conventional additives can also be used as evident for a skilled person in the art.

In principle the composition of the invention can be produced using any polymerization catalyst, e.g. a Ziegler Natta type of catalyst, a single site catalyst including metallocenes and non-metallocenes. The catalyst may be based on one or more transition metal catalysts or a late transition metal catalysts or any combinations thereof. The meaning of these type of catalysts is known in the field.

Preferable catalyst is a Ziegler-Natta catalyst, particularly a 4th and 5th generation type of high-yield Ziegler-Natta catalyst, which comprises a catalyst component, a co-catalyst component and at least one electron donor (internal and/or an external electron donor, preferably at least external donor). Preferably, the catalyst component is a Ti-Mg based catalyst component and typically the cocatalyst is Al-alkyl based compound. As examples of the usable catalysts reference is made to US 5 234 879, WO92/19653, WO92/19658 and WO99/33843.

Preferable external donors are known silane-based donors, preferably dicyclopentyl dimethoxy silane or cyclohexyl methyl dimethoxy silane.

As stated above also nucleating agents can be added to the propylene polymer. These are preferably added during the polymerization process of the propylene polymer. One way of adding the nucleating agent is to use a catalyst system modified with a nucleating agent as known in the art, e.g. as described in WO 9924478 and WO 9924479.

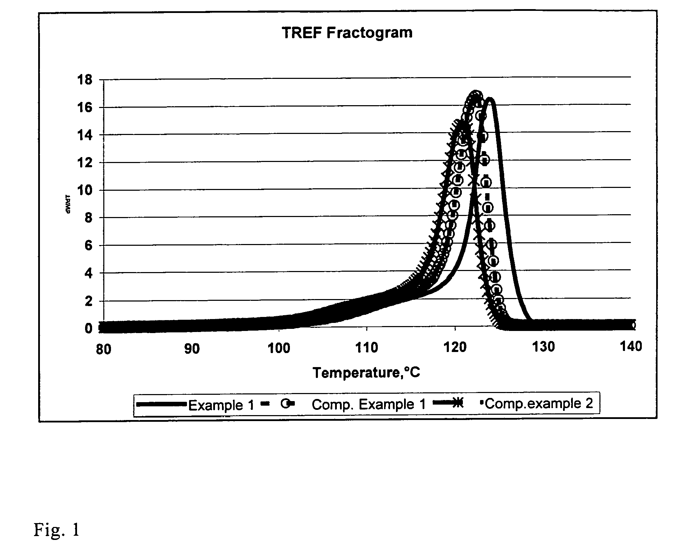

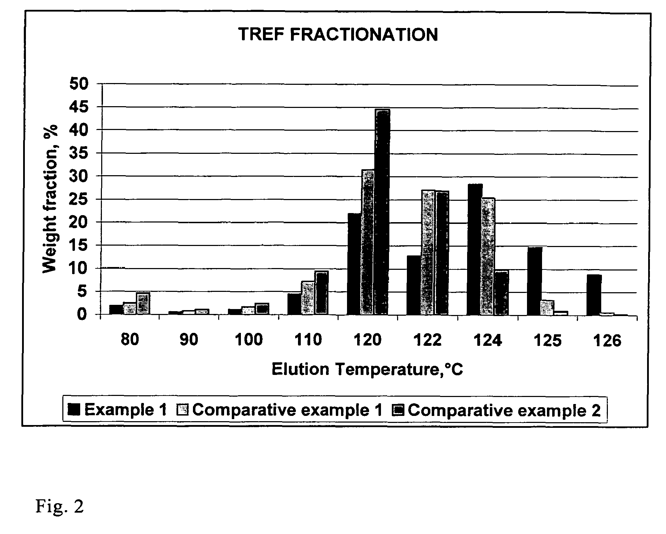

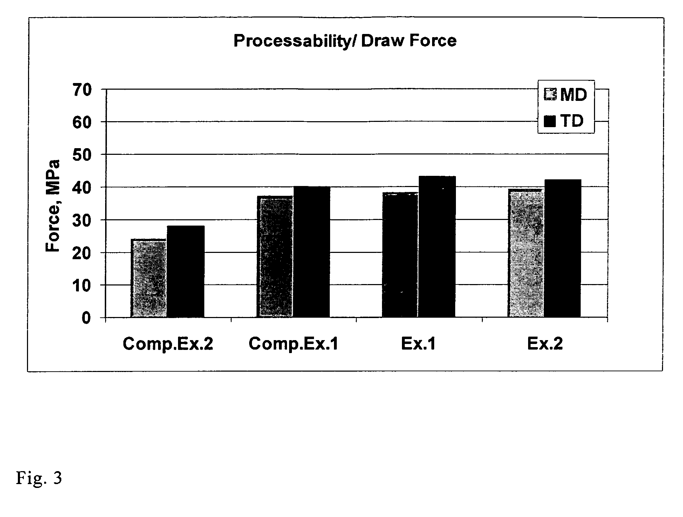

The propylene polymer has good stretchability properties as demonstrated in the experimental part below in tables 1-3 and figures 1-3.

Accordingly, the propylene polymer of the invention may be used in various end applications. The stiffness-processability balance of the polymer makes is highly suitable for various film applications, particularly for biaxially oriented film applications.

Compared to film applications, wherein comonomers are incorporated to propylene polymers to achieve a better processability, the propylene polymer of the present invention has not only a very even isotactic sequence distribution but also very long isotactic sequence lengths resulting in the characteristics as defined above.

Moreover, the propylene polymer composition has also good barrier properties which are advantageous e.g. for packaging material.

The propylene polymer is also highly suitable for very demanding end applications, such as capacitor film applications. In capacitor film applications high purity levels are also needed, whereby, depending on the requirements, the propylene polymer of the present invention may be subjected to a further washing step, if desired, for further reducing the amount of catalyst residues, such as Al residues.

In addition the present invention comprises also the films, in particular biaxially oriented films, comprising the inventive propylene polymer as defined above. The film may be a monolayered film comprising, or preferably consisting of, the propylene polymer. Alternatively, the film may be a multilayer film comprising the propylene polymer in one or more of the layers of the film. In multilayer film the propylene homopolymer preferably forms a base (or support) layer.

The films can be produced according to or analogously to methods well known in the art.

The propylene polymer of the invention may also be further blended e.g. mechanically to other polymer components depending on the end application. Such blends are also covered by the invention.

## Definitions and Determination methods

The terms and determination methods for the measured properties used for defining the invention apply generally both for the description part above and for the examples and claims below, unless otherwise stated:

- **TREF** analysis: **Temperature Rising Elution Fractionation (TREF)** analysis is well known.
  Instrument: CRYSTAF-TREF 200 instrument (company: Polymer CHAR, Spain) including the software for calculating the parameters and equitation.
  Solvent: 1,2,4-trichlorobenzene (TCB) stabilized with 300ppm of BHT.

Concentration: 80mg in 20ml of TCB

Determination conditions: Crystallization rate:0.5°C/min (between 95°-40°), elution rate: 1.00°C/min (between 40°-140°) and pump flow: 0.5ml/min.

The parameters and equations used to describe the high isotacticity level and the even isotacticity distribution (=isotactic sequence distribution) are calculated from the formed TREF curve as follows: The statistic parameters are calculated with the following formulas and using the software of the above TREF instrument:

Tp= the maximum temperature
Tw= weight average temperature
Tn= number average temperature

$$T_w = \frac{\sum c_i \cdot T_i}{\sum c_i}$$

$$T_n = \frac{\sum c_i}{\sum c_i / T_i}$$

$$r = \frac{T_w}{T_n}$$

$$R = \left( \frac{T_w}{T_n} - 1 \right) \cdot 100$$

$$\sigma = \sqrt{\frac{\sum c_i \left(T_i - T_w\right)^2}{\sum c_i}}$$

$$SDBI = \sqrt[4]{\frac{\sum \left|\left(T_i - T_w\right)^4 c_i\right|}{\sum c_i}}$$

It is to be understood that in principle any other determination method could be used which would give the corresponding results as the above determination method (within the limits of measurement accuracy as evident for a skilled person).

- **Melting temperature T$_m$, crystallization temperature T$_{cr}$, and the degree of crystallinity:** measured with Mettler TA820 differential scanning calorimetry (DSC) on $3 \pm 0.5$ mg samples. Both crystallization and melting curves were obtained during 10°C/min cooling and heating scans between 30°C and 225°C. Melting and crystallization temperatures were taken as the peaks of endotherms and exotherms. The degree of crystallinity was calculated by comparison with heat of fusion of a perfectly crystalline polypropylene, i.e. 209 J/g.

- **NMR:** The C$^{13}$NMR spectra of polypropylenes were recorded on Bruker 400 MHz spectrometer at 130°C from samples dissolved in 1,2,4-trichlorobenzene/benzene-d6 (90/10 w/w).

For the **pentad analysis** the assignment is done according to the methods described in literature: T. Hayashi, Y. Inoue, R. Chüjö, and T. Asakura, Polymer 29 138-43 (1988).and Chujo R, et al,Polymer 35 339 (1994).

Isotactic sequence length is expressed as **meso run length** which was determined from mmmm and mmmr pentads

$$MRL = 2 \times mmmm / mmmr.$$

- **SEC**: The weight average molecular weight (**Mw**) and number average molecular weight **(Mn)** and thus the molecular weight distribution **(MWD, Mw/Mn)** of polymers were determined with A Millipore Waters ALC/GPC operating at 135 °C and equipped with two mixed bed and one $10^7$ Å TSK-Gel columns (TOSOHAAS 16S) and a differential refractometer detector. The solvent 1,2,4-trichlorobezene was applied at flow rate of 1 ml/min. The columns were calibrated with narrow molecular weight distribution polystyrene standards and narrow and broad polypropylenes.

- **Multimodality, including bimodality,** with respect to the molecular weight distribution (MWD) means that the polymer comprises two or more polymer components with differing MFR's (and thus Mw's). Preferably the polymer components of the multimodal polymer are produced in two or more separate reactors, respectively, so that the products obtained from each reactor have said differing MFR's and Mw's).

- **MFR$_2$:** measured according to ISO 1133 (230°C, 2.16 kg load). E.g. the LMW and HMW components of the propylene polymer as defined above preferably have different MFR$_2$ values, whereby the LMW component has higher MFR than the HMW component.

- **Weight-%** is abbreviated as w% or wt-%

- **The xylene solubles (XS, wt%):** analysis according to the known method: 2.0 g of polymer was dissolved in 250 ml p-xylene at 135°C under agitation. After $30 \pm 2$ minutes the solution was allowed to cool for 15 minutes at ambient temperature and then allowed to settle for 30 minutes at $25 \pm 0.5$°C. The solution was filtered and evaporated in nitrogen flow and the residue dried under vacuum at 90°C until constant weight is reached.

$$XS\% = (100 \times m_1 \times v_0) / (m_0 \times v_1),$$

wherein

$m_0$ = initial polymer amount (g)
$m_1$ = weight of residue (g)
$v_0$ = initial volume (ml)
$V_1$ = volume of analyzed sample (ml)

- **Decaline solubles:** A 2 g polymer sample was dissolved in 100 ml decaline (decahydronaphthalene) by heating at 160°C and stirring for 1 h. The solution was cooled at room temperature for 1 h and then at 25°C another 1 h. The precipitated insoluble portion is filtrated and vacuum dried at 140°C. The total solids content of the filtrate is as a measure for the soluble fraction. Calculated as decaline solubles= [(gram of residue)/(gram of sample)] x 100%.

- **Stretchability**: Samples of about 85 mm x 85 mm were cut from the cast-film (with film thickness of 1 mm) for biaxial drawing in a laboratory film stretcher KARO IV (Brückner Maschinenbau GmbH, Siegsdorf, Germany). The drawing was performed at temperatures in the range of 160 -165°C.

- **Rheology**: Dynamic rheological measurements were carried out with Rheometrics RDA-II QC on compression molded samples under nitrogen atmosphere at 200°C using 25 mm —diameter plate and plate geometry. The oscillatory shear experiments were done within the linear viscoelastic range of strain at frequencies from 0.01 to 500 rad/s. (IS06721-1)

The values of storage modulus (G'), loss modulus (G"), complex modulus (G*) and complex viscosity ($\eta^*$) were obtained as a function of frequency ($\omega$).
**The Zero shear viscosity ($\eta_0$)** was calculated using complex fluidity defined as the reciprocal of complex viscosity. Its real and imaginary part are thus defined by

$$f'(\omega) = \eta'(\omega) / [\eta'(\omega)^2 + \eta''(\omega)^2]$$

and

$$f''(\omega) = \eta''(\omega) / [\eta'(\omega)^2 + \eta''(\omega)^2]$$

From the following equations

$$\eta' = G'' / \omega \quad and \quad \eta'' = G' / \omega$$

$$f'(\omega) = G''(\omega) * \omega / [G'(\omega)^2 + G''(\omega)^2]$$

$$f''(\omega) = G'(\omega) * \omega / [G'(\omega)^2 + G''(\omega)^2]$$

**The polydispercity index, PI,** is calculated from cross-over point of G'($\omega$) and G"($\omega$).
There is a linear correlation between f and f' with zero ordinate value of 1 /$\eta_0$ (Heino et al.[1])
For polypropylene this is valid at low frequencies and five first points (5 points/decade) are used in calculation of $\eta_0$.
**Elasticity indexes (G') and shear thinning indexes (SHI),** which are correlating with MWD and are independent of MW, were calculated according to Heino [1, 2] (below).

SHI is calculated by dividing the Zero Shear Viscosity by a complex viscosity value, obtained at a certain constant shear stress value, G*. The abbreviation, SHI (0/50), is the ratio between the zero shear viscosity and the viscosity at the shear stress of 50 000 Pa.

1) Rheological characterization of polyethylene fractions. Heino, E.L.; Lehtinen, A; Tanner, J.; Seppälä, J. Neste Oy, Porvoo, Finland. Theor. Appl. Rheol., Proc. Int. Congr. Rheol., 11th (1992), 1 360-362

2) The influence of molecular structure on some rheological properties of polyethylene. Heino, Eeva-Leena. Borealis Polymers Oy, Porvoo, Finland. Annual Transactions of the Nordic Rheology Society, 1995

- By the term **"random copolymer"** is meant herein that the comonomer in said copolymer is distributed randomly, i.e. by statistical insertion of the comonomer units, within the copolymer chain.

- **Comonomer content (wt%)** can be determined in a known manner based on Fourier transform infrared spectroscopy (FTIR) determination calibrated with $C^{13}$-NMR.

- **A modern, high-yield 4th or 5th Ziegler-Natta (ZN) catalyst** means a further generations of ZN catalysts which have been developed after the 2nd generation ZN catalysts and the catalytic activity of which is markedly higher than that of the 2nd generation ZN catalysts as very well known in the art.

The present invention is illustrated by means of examples:

## Examples

The raw materials are e.g. commercially available or can be produced according or analogously to the known methods described in literature, unless otherwise specified.

**Examples 1 and 2: Polymerisation:**

The catalyst used in both polymerizations was a known, modern high-yield, i.e. highly active, stereospecific transesterified $MgCl_2$-supported Ziegler-Natta catalyst prepared according to US 5234879. The catalyst was contacted with triethylaluminium (TEAL) as a cocatalyst and an external donor (dicyclopentyl dimethoxysilane) and then prepolymerised in a known manner in the presence of propylene and the cocatalyst in a separate prepolymerisation step. In both examples 1 and 2 the Al/Ti ratio was 200 mol/mol and Al/donor ratio was 5 mol/mol.

The polymerization was carried out in a continuous multistage process in pilot scale comprising a loop reactor and a fluidised bed gas phase reactor. The propylene and hydrogen were fed together with the activated catalyst into the loop reactor which operated as a bulk reactor at conditions given in table 1 (step (a) as defined above, production of the 1st propylene polymer component). Then the polymer slurry stream was fed from the loop reactor into the gas phase reactor and more propylene and hydrogen were fed in the gas phase reactor (step (b) as defined above, production of the 2nd propylene component in the presence of the reaction product of step (a) to obtain the propylene polymer of the invention). The polymerisation conditions in the gas phase are also given in table 1. Table 1 gives also the polymer properties of the loop, gas phase and final product.

The polymers of comparative examples 1 and 2 are commercially available grades, which have both been produced using the known 2nd generation Ziegler-Natta catalyst. The properties of these comparative materials are given in table 2 and figures.

**TABLE 1**

|  | Example 1 | Example 2 |
|---|---|---|
| **Catalyst type** |  |  |
| Donor type | dicyclo pentyl dimethoxy silane | dicyclo pentyl dimethoxy silane |
| Al/Ti ratio (mol/mol) | 200 | 200 |
| Al/donor ratio (mol/mol) | 5,0 | 5,0 |

(continued)

| Loop | | |
|---|---|---|
| Temperature (°C) | 85 | 85 |
| Split % | 55 | 58 |
| $MFR_2$ (g/10 min) | 0,6 | 0,5 |
| XS (%) | 1,7 | 2,0 |
| **GPR** | | |
| Temperature (°C) | 85 | 85 |
| Split % | 45 | 42 |
| $MFR_2$ (g/10 min) calculated | 55 | 100 |
| **Final propylene polymer** | | |
| $MFR_2$ (g/10 min) | 3,6 | 3,4 |
| **XS (%)** | 1,3 | 1,2 |
| ETA0, Zero viscosity (Pas) | 10826 | 13802 |
| **SHI (0/50)** | 17,8 | 20,0 |
| PI | 6,1 | 6,0 |
| | | |
| **Tm (°C)** | 163.5 | 166,4 |
| Cryst (%) | 52.7 | 54,4 |
| $T_{cr}$ (°C) | 118,4 | 123,9 |
| **Moisture barrier** | | |
| Permeability g/m2/24h | 4,2 | 4,3 |

**TABLE 2**

| | Unit | Example 1 | Comp. Example 1 | Com. Example 2 |
|---|---|---|---|---|
| MFR | g/10min | 3,6 | 3,1 | 3,4 |
| AL | ppm | 47,0 | 2 | 9,5 |
| TI | ppm | <1,0 | 1 | 0,9 |
| mmmm pentad | % | 97,65 | 94.25 | 91.84 |
| meso run length | | 574 | 90.0 | 70 |
| Decaline solubles | wt% | 0,7 | 1,6 | 3,4 |
| XS | % | 1,3 | 1,2 | 3,2 |
| | | | | |
| ETA 0 | Pa*s | 10826 | 11103 | 10766 |
| SHI (0/50) | None | 17,8 | 12,8 | 12,9 |
| PI | 1/Pa | 6,1 | 5,32 | 5,2 |
| Mw | mol/g | 430000 | 439000 | 440000 |
| Mn | mol/g | 54000 | 64600 | 62000 |
| MWD | | 8 | 6,8* | 7,1 |

(continued)

|  | Unit | **Example 1** | **Comp. Example 1** | **Com. Example 2** |
|---|---|---|---|---|
| Tm | °C | 163,5 | 163,1 | 159,3 |
| crystallinity | % | 52,7 | 52,9 | 48 |
| Tcr | °C | 118,4 | 114,7 | 112 |
| Moisture barrier |  |  |  |  |
| Permeability | g/m2/24h | 4,2 | 4,3 | 6,6 |

As can be seen from table 2, the present propylene polymer has i.a. an improved isotactic sequence length (meso run length) over the prior art.

**TABLE 3**

|  |  | **Example 1** | **Comp. Example 1** | **Comp. Example 2** |
|---|---|---|---|---|
| Elution temperature, °C |  | Cumulative fraction, % |  |  |
| 98 | % | 3,0 | 4,4 | 7,4 |
| 110 | % | 7,7 | 12,0 | 17,4 |
| 120 | % | 29,5 | 43,5 | 62,0 |
| 122 | % | 42,2 | 70,6 | 88,9 |
| 125 | % | 85,2 | 99,3 | 99,6 |
|  |  |  |  |  |
| Tp | °C | 123,8 | 122,4 | 120,8 |
| Tw | °C | 119,93 | 117,35 | 114,86 |
| r |  | 1,013 | 1,017 | 1,028 |
| R |  | 1,319 | 1,665 | 2,848 |
| σ | °C | 9,72 | 10,73 | 13,32 |
| SDBI | °C | 23,84 | 24,62 | 27,93 |
| Tp/R | °C | 93,85 | 73,53 | 42,41 |

## Claims

1.  A high crystalline propylene polymer having

a) $T_P$ of at least 122.5 °C and
b) $T_w$ of at least 118 °C, whereby
the $T_P$ and the $T_w$ are calculated from the temperature rising elution fractionation (TREF)-function of the propylene polymer in the range of 80 to 140 °C, wherein
$T_P$ is the maximum temperature of the TREF-function;
$T_w$ the weight average temperature of the TREF-function defined by

$$T_w = \frac{\sum c_i \cdot T_i}{\sum c_i}$$

$T_i$ the temperature at which the concentration $c_i$ of an elute is determined; and
$c_i$ the concentration of the elute at the temperature $T_i$.

**2.** Propylene polymer according to claim 1, wherein $T_P$ is at least 123 °C.

**3.** Propylene polymer according to claim 1 or 2, wherein $T_w$ is at least 119 °C.

**4.** Propylene polymer according to any one of the preceding claims, wherein the propylene polymer has $T_P/R$ of at least 80 °C, whereby R is defined by

$$R = \left( \frac{T_w}{T_n} - 1 \right) \cdot 100$$

$T_n$ is the number average temperature of the TREF-function defined by $T_n = \Sigma c_i / (\Sigma c_i / T_i)$.

**5.** Propylene polymer according to any one of the preceding claims, wherein the propylene polymer has a value $\sigma$ of not more than 10 °C, whereby $\sigma$ is defined by

$$\sigma = \sqrt{\frac{\sum c_i \left( T_i - T_w \right)^2}{\sum c_i}}$$

**6.** Propylene polymer according to any one of the preceding claims, wherein the propylene polymer has a SDBI of lower than 24 °C, whereby SDBI is defined by

$$SDBI = \sqrt[4]{\frac{\sum \left| \left( T_i - T_w \right)^4 c_i \right|}{\sum c_i}}$$

**7.** Propylene polymer according to any one of the preceding claims, wherein the propylene polymer has a chain isotacticity index (mmmm pentads) of at least 97 % measured by means of $^{13}$C-NMR.

**8.** Propylene polymer according to any one of the preceding claims, wherein the propylene polymer has an isotactic sequence length of at least 150, preferably at least 200, measured as meso run length values by means of[13]C-NMR.

**9.** Propylene polymer according to any one of the preceding claims, wherein the propylene polymer has xylene solubles below 3 wt%, preferably below 1.5 wt%.

**10.** Propylene polymer according to any one of the preceding claims, wherein the propylene polymer has decaline solubles below 2.5 wt%, preferably below 1.6 wt%.

**11.** Propylene polymer according to any one of the preceding claims, wherein the propylene polymer has a $M_w/M_n$ of at least 5.

**12.** Propylene polymer according to any one of the preceding claims, wherein the propylene polymer has polydispersity index (PI) of at least 5.0.

**13.** Propylene polymer according to any one of the preceding claims, wherein the propylene polymer has a shear thinning index (SHI) of at least 12.

**14.** Propylene polymer according to any one of the preceding claims, wherein the propylene polymer has a $MFR_2$ of 2 to 6 g/10min.

15. Propylene polymer according to any one of the preceding claims, wherein the propylene polymer has melting temperature ($T_m$) of at least 162 °C.

16. Propylene polymer according to any one of the preceding claims, wherein the propylene polymer has crystallization temperature ($T_{cr}$) of at least 113 °C, preferably at least 115 °C.

17. Propylene polymer according to any one of the preceding claims, wherein the propylene polymer has crystallinity of at least 50 %.

18. Propylene polymer according to any one of the preceding claims, wherein the propylene polymer has an Al content less than 50 ppm.

19. Propylene polymer according to any one of the preceding claims, wherein the propylene polymer is a homopolymer.

20. Propylene polymer according to any one of the preceding claims, wherein the propylene polymer is multimodal polymer with respect to molecular weight distribution.

21. Propylene polymer according to claim 20, wherein the propylene polymer comprises two propylene polymer components with different weight average molecular weights ($M_w$), preferably a reactor blend of isotactic homopolymers.

22. Propylene polymer according to claim 21, whereby the propylene polymer consists of 30 to 70 wt% of a low molecular weight (LMW)-fraction and 70 to 30 wt% of a high molecular weight (HMW)-fraction.

23. Propylene polymer according to any of the preceding claims, wherein the propylene polymer is a reactor-made propylene polymer.

24. Process for producing a propylene polymer according to any one of the preceding claims, wherein the propylene polymer is produced in the presence of a catalyst in a multistage process comprising a slurry reactor and a gas phase reactor.

25. Process according to claim 24, comprising the steps of

a. polymerising propylene into a first polymerisation product in a first reaction zone comprising the slurry reactor,
b. transferring subsequently said first polymerisation product to a second reaction zone comprising the gas phase reactor; and
c. continuing the polymerisation of the propylene in the gas phase in the presence of said first polymerisation product.

26. Process according to claim 24 or 25, wherein the temperature in the slurry reactor and the gas phase reactor is at least 80 °C.

27. Process according to any one of the preceding claims 24 to 26, wherein the temperature in the gas phase reactor is higher as in the slurry reactor.

28. Process according to any one of the preceding claims 25 to 27, wherein the high molecular weight (HMW)-fraction is produced in the first reaction zone and the low molecular weight (LMW)-fraction in the second reaction zone.

29. Use of a propylene polymer according to any one of the preceding claims 1 to 23 for producing polymer articles, preferably films.

30. Use according to claim 29, wherein the film is a biaxially oriented film.

31. A film comprising a propylene polymer according to any one of the preceding claims 1 to 23.

32. The film according to claim 31, wherein the film is biaxially oriented.

Fig. 1

Fig. 2

Fig. 3

European Patent
Office

EUROPEAN SEARCH REPORT

Application Number

EP 05 01 1524

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | WO 99/24479 A (BOREALIS A/S; HUOVINEN, PAEIVI; JAEAESKELAEINEN, PIRJO; KARBASI, AMIR;) 20 May 1999 (1999-05-20) * claims; examples; tables * | 1-32 | C08F110/06 C08F2/00 |
| D,X | WO 2004/013193 A (BASELL POLIOLEFINE ITALIA S.P.A; MEESTERS, ELS; NEWS, JEAN; GUIDICINI,) 12 February 2004 (2004-02-12) | 1-23, 29-32 | |
| A | * page 2, line 4 - line 30; claims; examples; tables * | 24-28 | |
| X | EP 0 903 356 A (MITSUI CHEMICALS, INC) 24 March 1999 (1999-03-24) | 1-24, 29-32 | |
| A | * paragraph [0136]; example 7 * * paragraph [0144] - paragraph [0147]; claims; examples * | 25-28 | |
| D,A | EP 0 339 804 A (EXXON CHEMICAL PATENTS INC) 2 November 1989 (1989-11-02) | 1-23, 29-32 | |
| A | | 24-28 | |
| X | EP 0 498 603 A (AMOCO CORPORATION) 12 August 1992 (1992-08-12) * page 6, line 39 - line 42 * * page 7, line 35 - line 45 * * claims; examples * | 1-24, 29-32 | TECHNICAL FIELDS SEARCHED (Int.Cl.7) C08F |
| X | EP 0 404 519 A (CHISSO CORPORATION) 27 December 1990 (1990-12-27) * examples 11,14,15 * | 1-23, 29-32 | |
| D,A | US 5 234 879 A (GAROFF ET AL) 10 August 1993 (1993-08-10) * the whole document * | 1,24 | |

The present search report has been drawn up for all claims

| Place of search | Date of completion of the search | Examiner |
|---|---|---|
| The Hague | 19 September 2005 | Kaumann, E |

EPO FORM 1503 03.82 (P04C01)

**EP 1 726 603 A1**

## ANNEX TO THE EUROPEAN SEARCH REPORT
## ON EUROPEAN PATENT APPLICATION NO.

EP 05 01 1524

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2005

| Patent document cited in search report | | Publication date | Patent family member(s) | | Publication date |
|---|---|---|---|---|---|
| WO 9924479 | A | 20-05-1999 | AT | 238357 T | 15-05-2003 |
| | | | AU | 744784 B2 | 07-03-2002 |
| | | | AU | 1035799 A | 31-05-1999 |
| | | | BR | 9814854 A | 03-10-2000 |
| | | | CA | 2308075 A1 | 20-05-1999 |
| | | | CN | 1116316 C | 30-07-2003 |
| | | | DE | 69813871 D1 | 28-05-2003 |
| | | | DE | 69813871 T2 | 26-02-2004 |
| | | | EP | 1028985 A1 | 23-08-2000 |
| | | | ES | 2198759 T3 | 01-02-2004 |
| | | | JP | 2001522904 T | 20-11-2001 |
| | | | US | 6503993 B1 | 07-01-2003 |
| WO 2004013193 | A | 12-02-2004 | AU | 2003250201 A1 | 23-02-2004 |
| | | | BR | 0306195 A | 19-10-2004 |
| | | | CA | 2492939 A1 | 12-02-2004 |
| EP 0903356 | A | 24-03-1999 | CA | 2256707 A1 | 04-12-1997 |
| | | | CN | 1219941 A | 16-06-1999 |
| | | | WO | 9745463 A1 | 04-12-1997 |
| | | | KR | 2000016063 A | 25-03-2000 |
| | | | US | 2001025090 A1 | 27-09-2001 |
| EP 0339804 | A | 02-11-1989 | AT | 156142 T | 15-08-1997 |
| | | | CA | 1314645 C | 16-03-1993 |
| | | | DE | 68928212 D1 | 04-09-1997 |
| | | | DE | 68928212 T2 | 13-11-1997 |
| | | | ES | 2104560 T3 | 16-10-1997 |
| | | | JP | 2150406 A | 08-06-1990 |
| | | | JP | 2794591 B2 | 10-09-1998 |
| | | | NO | 891780 A | 30-10-1989 |
| | | | US | 4950720 A | 21-08-1990 |
| EP 0498603 | A | 12-08-1992 | AT | 146806 T | 15-01-1997 |
| | | | CA | 2059838 A1 | 05-08-1992 |
| | | | CS | 9200307 A3 | 12-08-1992 |
| | | | DE | 69216117 D1 | 06-02-1997 |
| | | | DE | 69216117 T2 | 17-07-1997 |
| | | | JP | 5105722 A | 27-04-1993 |
| | | | KR | 263263 B1 | 01-08-2000 |
| | | | SK | 280948 B6 | 12-09-2000 |
| | | | US | 5218052 A | 08-06-1993 |
| EP 0404519 | A | 27-12-1990 | CA | 2018829 A1 | 19-12-1990 |
| | | | DE | 69028008 D1 | 12-09-1996 |
| | | | DE | 69028008 T2 | 23-01-1997 |

EPO FORM P0459

For more details about this annex : see Official Journal of the European Patent Office, No. 12/82

19

## ANNEX TO THE EUROPEAN SEARCH REPORT
## ON EUROPEAN PATENT APPLICATION NO.

EP 05 01 1524

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2005

| Patent document cited in search report | | Publication date | Patent family member(s) | | Publication date |
|---|---|---|---|---|---|
| EP 0404519 | A | | DE<br>DE<br>US | 69028720 D1<br>69028720 T2<br>5077341 A | 31-10-1996<br>27-02-1997<br>31-12-1991 |
| US 5234879 | A | 10-08-1993 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0339804 A
- WO 2004013193 A
- EP 0887379 A
- WO 9212182 A
- US 5234879 A
- WO 9219653 A
- WO 9219658 A
- WO 9933843 A
- WO 9924478 A
- WO 9924479 A

**Non-patent literature cited in the description**

- **T. HAYASHI ; Y. INOUE ; R. CHÜJÖ ; T. ASAKURA.** *Polymer,* 1988, vol. 29, 138-43
- **CHUJO R et al.** *Polymer,* 1994, vol. 35, 339
- **HEINO, E.L. ; LEHTINEN, A ; TANNER, J. ; SEPPÄLÄ, J. ; NESTE OY.** *Theor. Appl. Rheol., Proc. Int. Congr. Rheol.,* 1992, vol. 1, 360-362